# EUROPÄISCHE PATENTSCHRIFT

(11) **EP 0 638 525 B1**
(45) Veröffentlichungstag und Bekanntmachung des Hinweises auf die Patenterteilung: **21.04.1999**
(21) Anmeldenummer: 94112318.4
(22) Anmeldetag: 06.08.1994
(51) Int. Cl.: C03B 5/04, C03B 5/225, C03B 5/193, C03B 3/02, C03B 5/235

(54) **Verfahren zum Schmelzen von Glas in einem Wannenofen und Wannenofen hierfür**
Method for melting glass in a tank furnace and tank furnace used therefor
Procédé de fusion de verre dans un four à bassin et four à bassin pour appliquer ledit procédé

(30) Priorität: 13.08.1993 DE 4327237
(43) Veröffentlichungstag der Anmeldung: 15.02.1995
(73) Patentinhaber: Beteiligungen Sorg GmbH & Co. KG, D-97816 Lohr (DE)
(72) Erfinder: Sorg, Helmut, Dipl.-Ing., D-63864 Glattbach (DE); Pieper, Helmut, Dipl.-Ing., D-97816 Lohr am Main (DE)
(74) Vertreter: Zapfe, Hans, Dipl.-Ing.

(56) Entgegenhaltungen:
- EP-A- 0 293 545
- DE-C- 806 997
- DE-C- 806 998
- GB-A- 2 204 310

## Beschreibung

Die Erfindung betrifft ein Verfahren zum Schmelzen von Glas in einem eine Schmelzwanne mit einem Wannenbassin mit einem Wannenboden und einen Oberbau mit einem Gewölbe aufweisenden Wannenofen, der
a) in Längsrichtung zwischen dem nahe einer ersten Stirnwand angeordneten Aufgabeende für den Glasrohstoff und einer zweiten Stirnwand hintereinander einen Vorwärmteil, einen Schmelzteil, einen Läuterteil mit einer vom übrigen Wannenbassin aufragenden Läuterbank und einen Homogenisierungsteil aufweist, wobei
b) im Ofeninnenraum zwischen der ersten Stirnwand am Aufgabeende und dem Schmelzteil mindestens eine von dem Gewölbe nach unten ragende, die Flammenstrahlung zurückhaltende Trennwand angeordnet ist, die zum Zwecke der Aufheizung des Glasrohstoffs durch das Abgas einen Strömungsweg für das von Brennern kommende Abgas zum Vorwärmteil freiläßt, und
c) der Schmelzteil, der Läuterteil, mehrere Brenner und der Homogenisierungsteil einem gemeinsamen Feuerraum des Oberbaus zugeordnet sind, der an seinen beiden Enden von der letzten Trennwand und der Innenfläche der zweiten Stirnwand begrenzt wird, und
d) zwischen der Innenfläche der ersten Stirnwand und der Mittenebene (E) der besagten letzten Trennwand vor dem Läuterteil ein erster Strömungsweg mit einer Horizontalkomponente der Länge "L1" für das Glas gebildet wird, und
e) in dem besagten Feuerraum zwischen der Mittenebene (E) der besagten letzten Trennwand und der Innenfläche der zweiten Stirnwand ein zweiter Strömungsweg mit einer Horizontalkomponente der Länge "L2" für das Glas gebildet wird, und
f) wobei durch Erzeugung eines Temperaturgradienten in der Glasschmelze durch Zufuhr von Heizenergie zur Glasbadoberfläche durch die in dem Feuerraum angeordneten Brenner eine Strömung vom Schmelzteil in Richtung auf das Aufgabeende und eine entgegengesetzte Bodenströmung erzeugt werden.

Ein solches Verfahren und eine hierfür geeignete Vorrichtung sind durch die EP-B-0 293 545, EP-B-0 237 604 und EP-B-0 230 492 bekannt. Dabei geht es vorrangig darum, die Stickoxide und den Staubgehalt im Abgas zu verringern und gleichzeitig den thermischen Wirkungsgrad zu vergrößern. Ein wesentliches Merkmal ist dabei, daß durch die im Schmelzteil bewirkte sehr starke Beheizung der Glasschmelze durch fossile Brenner in der Glasschmelze ein vom Aufgabeende zum Läuterteil ansteigender Temperaturgradient erzeugt wird, durch den im Glas eine Strömung vom Schmelzteil in Richtung auf das Aufgabeende erzeugt wird. Durch die weitere Maßnahme, die Abgase der Brenner über den Wanneninhalt bis zum Aufgabeende zu führen, wo sie durch zwei seitliche Abzugsöffnungen zunächst zu Wärmetauschern und dann zu einem Abgaskamin geführt werden, wird in Verbindung mit der Strömungsführung durch innere Trennwände erreicht, daß das Abgas über den zunächst noch auf der Glasbadoberfläche schwimmenden Glasrohstoff streicht und diesem dadurch erhebliche Wärmemengen zuführt, die das Aufschmelzen begünstigen und beschleunigen. Die Abgasführung erfolgt also im wesentlichen im Gegenstrom zur Transportrichtung des Glasrohstoffs, der aus Gemenge und/oder Glasscherben bestehen kann.

Die fossilen Brenner sind dabei im Oberbau eines Feuerraums angeordnet, in der sich auch der Schmelzteil, der Läuterteil mit einer sehr geringen Badtiefe und in Strömungsrichtung anschließend der Homogenisierungsteil mit einer erheblich vergrößerten Badtiefe befindet, der seinerseits wiederum zu einem Durchlaß für die Glasschmelze in Richtung auf eine Arbeitswanne führt. Die fossilen Brenner sind dabei zum Teil oberhalb des sehr flachen Läuterteils angeordnet, was nicht ausschließt, daß sich weitere Brenner noch vor der letzten Trennwand befinden, die den besagten Feuerraum in Richtung auf das Aufgabeende begrenzt. Der in Strömungsrichtung vor dieser Trennwand liegende Teil des Ofens wird als Vorwärmteil bezeichnet. Die Gesamtlänge des Wannenofens wird also durch die Länge von Vorwärmteil, Schmelzteil, Läuterteil und Homogenisierungsteil bestimmt. Bei der bekannten Lösung beträgt die Länge des besagten Feuerraums, gerechnet von der Mittenebene der stromaufwärts gelegenen Trennwand bis zur Innenseite der stromabwärts gelegenen Stirnwand deutlich weniger als 50 % des Abstandes zwischen der Innenseite der Stirnwand am Aufgabeende und der Innenseite der am anderen Ofenende liegenden Stirnwand im Bereich des Durchlasses.

Nimmt man die Zeichnung als maßstäblich, so hat der besagte Feuerraum mit den fossilen Brennern, dem Schmelz-, dem Läuter- und dem Homogenisierungsteil etwa 1/3 der Gesamtlänge des Wannenofens, während der Vorwärmteil sich über die übrigen 2/3 der Länge erstreckt. Dieses Längenverhältnis führt zu erheblichen Wärmeverlusten auf dem Strömungsweg des Glases im Vorwärmteil, so daß die Strömung der Glasschmelze keinen ausreichenden Wärmetransport mehr in Richtung auf das Aufgabeende des Ofens bewirkt. Gerade an dieser Stelle aber werden sehr große Wärmemengen für das Aufschmelzen der Glasrohstoffe benötigt.

Zur Beseitigung dieses Problems hat man bei der bekannten Lösung im Bodenbereich des Aufgabeendes zusätzliche Elektroden vorgesehen, durch die die Glasschmelze am Aufgabeende elektrisch beheizt wird, um an dieser Stelle ein Unterschreiten bestimmter Temperaturen oder gar ein Einfrieren der Glasschmelze zu vermeiden.

Diese Elektroden haben jedoch insofern Nachteile, als sie
1. die Baukosten und den Ofenbetrieb durch die Notwendigkeit eines leistungsfähigen Transformators und die Versorgung mit teurem Heizstrom ungünstig beeinflussen und
2. in der Glasschmelze eine thermisch bedingte Aufwärtsströmung erzeugen, die der vom Schmelzteil kommenden Strömung in der Glasschmelze entgegenwirkt, diese also nicht sinnvoll ergänzt.

Der Erfindung liegt daher die Aufgabe zugrunde, das Verfahren nach dem Stande der Technik dahingehend zu verbessern, daß die Vorteile des bekannten Ofens, nämlich die Reduzierung der Stickoxide und des Staubanteils im Abgas erhalten bleiben, gleichzeitig aber die Investitions- und Betriebskosten noch weiter verringert werden.

Die Lösung der gestellten Aufgabe erfolgt bei dem eingangs beschriebenen Verfahren erfindungsgemäß dadurch, daß
g) das Verhältnis der Länge "L2" der Horizontalkomponente des zweiten Strömungsweges der Glasschmelze im Feuerraum zur Summenlänge ("L1" + "L2") der Horizontalkomponenten des ersten und des zweiten Strömungsweges der Glasschmelze zu mindestens 0,5 gewählt wird,
h) die Heizenergie zumindest überwiegend der Glasschmelze im Schmelzteil zugeführt wird, und
i) dem Glasrohstoff die Heiz- und Schmelzenergie von oben her durch das Abgas und von unten her ausschließlich durch die bis zum Aufgabeende geführte Strömung der Glasschmelze zugeführt wird.

Vorzugsweise beträgt das Verhältnis L2 : (L1 + L2) mindestens 0,53.

Die Erfindung besteht also bei gegebener Gesamtlänge des Wannenofens im Ergebnis darin, den Feuerraum mit den fossilen Brennern, dem Schmelzteil, dem Läuterteil und dem Homogenisierungsteil auf Kosten der Länge des davor liegenden Ofenteils, des sogenannten Vorwärmteiles, zu vergrößern und damit den Strömungsweg für die Strömung im Glas im Vorwärmteil zu verringern. Weiterhin wird die Energie der fossilen Brenner zumindest überwiegend im Schmelzteil vor der Läuterbank des Läuterteils erzeugt, d.h., an einer Stelle, an der das Glasbad noch eine erheblich größere Tiefe hat als oberhalb der Läuterbank. Schließlich wird dadurch die Strömung in der Glasschmelze bis unmittelbar an das Aufgabeende der Schmelzwanne geführt, so daß das noch relativ heiße Glas unmittelbar in thermische Wechselwirkung mit dem dort aufgegebenen Glasrohstoff treten kann.

Es hat sich überraschend gezeigt, daß durch diese Maßnahmen auf eine zusätzliche elektrische Beheizung im Bodenbereich des Aufgabeendes vollständig verzichtet werden kann, so daß nicht nur aufwendige Investitionen wie Transformatoren etc. eingespart werden können, sondern auch teurer Heizstrom, ohne daß am Aufgabeende eine unzulässige Temperaturabsenkung oder gar ein Einfrieren der Schmelze zu beobachten gewesen wäre.

Es ist hierbei besonders vorteilhaft, wenn zusätzlich in einer Entfernung von 100 bis 300 cm in Strömungsrichtung vor der Läuterbank durch Gasblasen aus mindestens einer Bubbler-Reihe, die senkrecht zur Längsachse der Wanne angeordnet ist, die Strömung in der Schmelze unterstützt wird.

Es ist weiterhin von Vorteil, wenn durch mindestens zwei sich gegenüberliegende Brenner, die über der mindestens einen Bubbler-Reihe angeordnet sind und die eine höhere Leistung als die übrigen Brenner aufweisen, der Energieeintrag in die Schmelze im Bereich der Bubbler erhöht wird. Durch die Erhöhung der Temperaturdifferenz zwischen dem Gebiet der Gemengeeinlage am Aufgabeende und dem Gebiet vor der Läuterbank wird die natürliche Strömung unterstützt, welche den Energietransport unter die Gemengeeinlage bestimmt. Dadurch ist es möglich, auch die absoluten Abmessungen des gesamten Wannenofens zu vergrößern.

Die Erfindung betrifft auch einen Wannenofen zum Schmelzen von Glas mit einer Schmelzwanne mit einem Wannenbassin mit Wannenboden und mit einem Oberbau mit einem Gewölbe, der
a) in Längsrichtung zwischen dem nahe einer ersten Stirnwand angeordneten Aufgabeende für den Glasrohstoff und einer zweiten Stirnwand hintereinander einen Vorwärmteil, einen Schmelzteil, einen Läuterteil mit einer vom übrigen Wannenboden aufragenden Läuterbank und einen Homogenisierungsteil aufweist, wobei
b) im Ofeninnenraum zwischen der ersten Stirnwand am Aufgabeende und dem Schmelzteil mindestens eine von dem Gewölbe nach unten ragende, die Flammenstrahlung zurückhaltende Trennwand angeordnet ist, die zum Zwecke der Aufheizung des Glasrohstoffs durch das Abgas einen Strömungsweg für das von den Brennern kommende Abgas zum Vorwärmteil freiläßt, und
c) der Schmelzteil, der Läuterteil, mehrere Brenner und der Homogenisierungsteil einem gemeinsamen Feuerraum des Oberbaus zugeordnet sind, der an seinen beiden Enden von der letzten Trennwand und der Innenfläche der zweiten Stirnwand begrenzt wird, und
d) zwischen der Innenfläche der ersten Stirnwand und der Mittenebene (E) der besagten letzten Trennwand vor dem Schmelz- und Läuterteil ein erster Abstand "L1" vorhanden ist, und
e) in dem besagten Feuerraum zwischen der Mittenebene (E) der besagten letzten Trennwand und der Innenfläche der zweiten Stirnwand ein zweiter Abstand "L2" vorhanden ist.
   Zur Lösung der gleichen Aufgabe ist ein solcher Wannenofen erfindungsgemäß dadurch gekennzeichnet, daß
f) das Verhältnis des zweiten Abstandes "L2" in dem Feuerraum zur Summe des ersten und des zweiten Abstandes ("L1" + "L2") zwischen den Innenflächen der ersten und der zweiten Stirnwand mindestens 0,5 beträgt,
g) die Mehrzahl der Brenner im Bereich des Schmelzteiles vor der Läuterbank des Läuterteils über dem tiefer liegenden Teil des Wannenbodens angeordnet ist, und
h) das Aufgabeende der Schmelzwanne frei von elektrischen Heizeinrichtungen ist.

Vorzugsweise beträgt das Verhältnis L2 : (L1 + L2) mindestens 0,53.

Bei Beachtung dieser Konstruktionsrichtlinien treten die bereits weiter oben beschriebenen Vorteile ein: Der betreffende Ofen hat einen einfachen Aufbau und verursacht durch den Wegfall des Transformators und der Elektroden am Aufgabeende geringere Investitions- und Wartungskosten, vor allem aber geringere Betriebskosten. Hierbei ist noch zusätzlich zu beachten, daß durch die Wasserkühlung der Elektroden neben der Beheizung auch ein weiterer Wärmeverlust eintritt, der durch den Erfindungsgegenstand gleichfalls vermieden wird.

Es ist dabei besonders vorteilhaft, wenn im Bassin in einer Entfernung von 100 bis 300 cm in Strömungsrichtung vor der Läuterbank mindestens eine Bubbler-Reihe angeordnet ist.

Es ist weiterhin von Vorteil, wenn über der mindestens einen Bubbler-Reihe mindestens zwei sich gegenüberliegende Brenner angeordnet sind, die für eine höhere Leistung als die übrigen Brenner ausgelegt sind. Dadurch wird der Energieeintrag im Bereich der Bubbler intensiviert. Durch die Erhöhung der Temperaturdifferenz zwischen dem Gebiet der Gemengeeinlage und dem Gebiet vor der Läuterbank wird die natürliche Strömung unterstützt, welche den Energietransport unter die Gemengeeinlage bestimmt.

Weitere vorteilhafte Ausgestaltungen des Erfindungsgegenstandes ergeben sich aus den übrigen Unteransprüchen.

Ein Ausführungsbeispiel des Erfindungsgegenstandes und das darin ausgeübte Verfahren werden nachfolgend anhand der Figuren 1 bis 3 näher erläutert.

Es zeigen:
- Figur 1: einen vertikalen axialen Längsschnitt durch den Wannenofen,
- Figur 2: zwei waagerechte Längsschnitte, und zwar oberhalb der Längsachse X-X durch den Oberbau mit Trennwänden und Brennern und unterhalb der Längsachse X-X durch den Wannenofen selbst, und
- Figur 3: einen Teilausschnitt aus Figur 2 mit zusätzlich im Wannenboden angeordneten Bubblern.

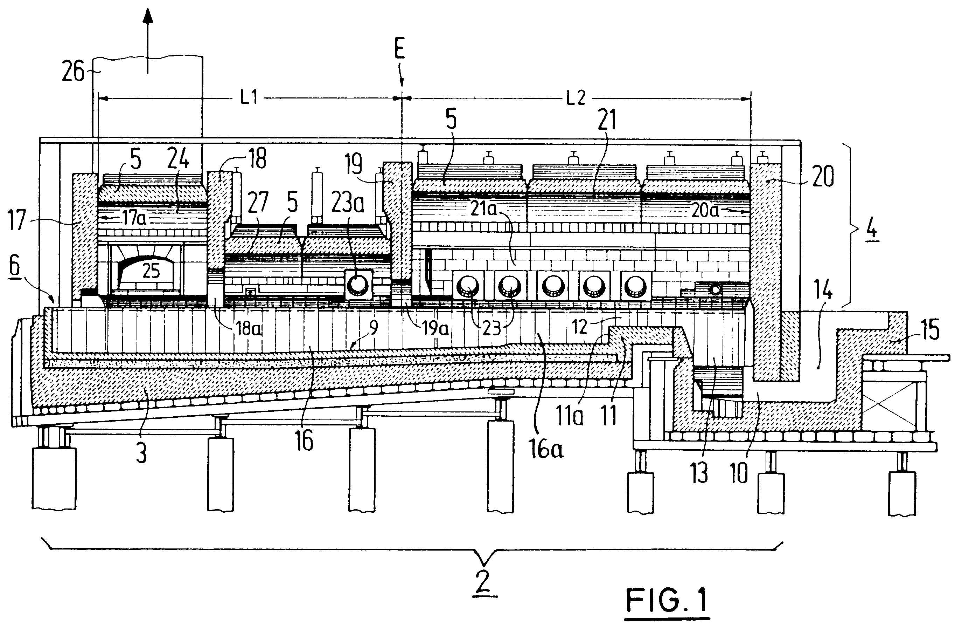

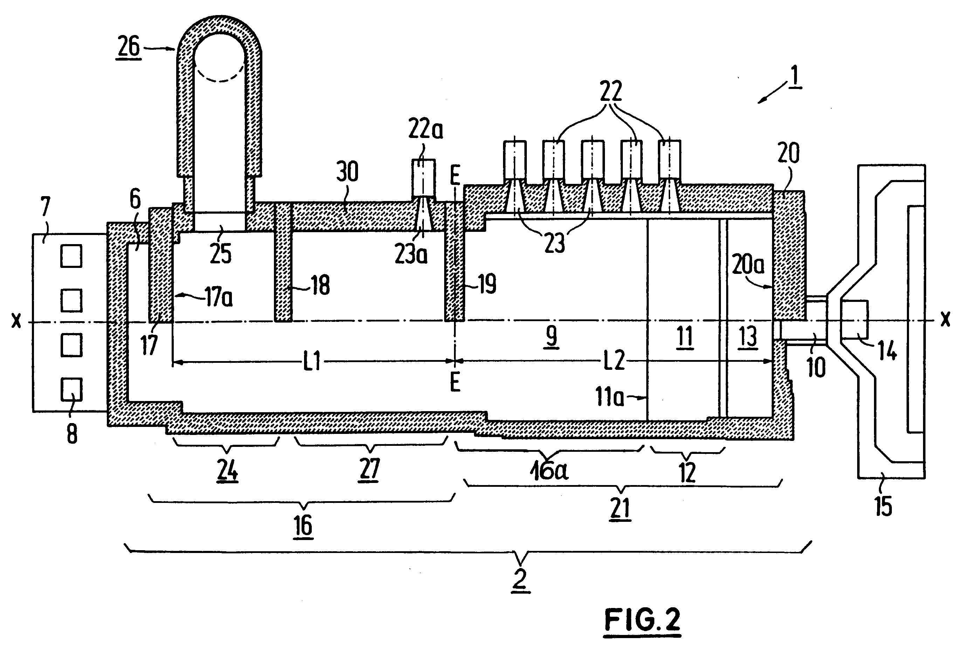

In den Figuren 1 und 2 ist ein Wannenofen 1 dargestellt, der aus einer Schmelzwanne 2 mit einem Wannenbassin 3 und einem Oberbau 4 mit einem Gewölbe 5 besteht, das - wie in Figur 1 dargestellt - aus mehreren Teilen bestehen und abgestuft ausgebildet sein kann.

Das Wannenbassin 3 besitzt ein Aufgabeende 6, an dem sich mindestens eine hier nicht gezeigte Einlegevorrichtung befindet. Im vorliegenden Fall wird der Glasrohstoff auf nahezu der gesamten Breite des Wannenbassins 3 aufgelegt, was in Figur 2 durch einen Rohstoffbehälter 7 mit vier Austrittsöffnungen 8 für die Abgabe des Glasrohstoffs angedeutet ist. Unter den Austrittsöffnungen befinden sich vier hier nicht dargestellte Einlegevorrichtungen an sich bekannter Bauart.

Das Wannenbassin 3 besitzt einen Wannenboden 9, der zwischen dem Aufgabeende 6 und einem Durchlaß 10 für das geschmolzene Glas eine Läuterbank 11 aufweist, oberhalb welcher ein Läuterteil 12 gebildet wird. An den Läuterteil 12 schließt sich in Richtung des Durchlasses 10 ein Homogenisierungsteil 13 an, das an seiner tiefsten Stelle unmittelbar in den Durchlaß 10 übergeht. Hinter dem Durchlaß 10 befindet sich ein Riser 14, der von unten in eine Arbeitswanne 15 mündet, an die sich hier nicht gezeigte Speiser oder Vorherde anschließen.

Der Oberbau 4 hat folgende Bauweise: Etwa oberhalb des Aufgabeendes 6 befindet sich eine erste Stirnwand 17 mit einer Innenfläche 17a. Danach folgen mit Abständen eine erste Trennwand 18 und eine zweite Trennwand 19, deren Mittenebene E für die nachfolgenden Wege- und Abstandsbestimmungen von Bedeutung ist. Die beiden Trennwände 18 und 19 besitzten im Bereich ihrer unteren Enden Abgasöffnungen 18a und 19a. Auf die Funktion dieser Abgasöffnungen wird nachstehend noch näher eingegangen werden. Der Längenabschnitt zwischen dem Aufgabeende 6 und der Trennwand 19 bildet einen sogenannten Vorwärmteil 16, an welchen sich ein Schmelzteil 16a anschließt, wobei allerdings betont wird, daß die Übergänge zwischen Vorwärmteil und Schmelzteil fließend sind. Der Schmelzteil 16a reicht bis zum Läuterteil 12.

Über dem Durchlaß 10 befindet sich eine zweite Stirnwand 20 mit einer Innenfläche 20a. Zwischen der zweiten Trennwand 19 und der zweiten Stirnwand 20 wird unterhalb des Gewölbes 5 ein Feuerraum 21 gebildet, in dem sich auch der Schmelzteil 16a, die Läuterbank 11 für die Bildung des Läuterteils 12 und der Homogenisierungsteil 13 befinden. Jeder Seitenwand 21a des Feuerraumes 21 sind fossile Brenner 22 zugeordnet, von denen in Figur 1 nur die Düsensteine 23 zu sehen sind.

Es liegen sich also in bezug auf den Feuerraum 21 insgesamt mehrere Brenner 22 paarweise und in bezug auf die Achse X-X spiegelbildlich gegenüber, wobei die in Figur 2 angedeuteten Brennerachsen aufeinander zu gerichtet sind bzw. miteinander fluchten. Sie können aber auch versetzt zueinander angeordnet werden.

Wie den Figuren 1 und 2 zu entnehmen ist, liegen mehrere Brennerpaare vor der Vorderkante 11a der Läuterbank 11 im Schmelzteil 16a, und nur ein Brennerpaar liegt oberhalb der Läuterbank 11 im Läuterteil 12. Dadurch befindet sich die Mehrzahl der Brenner 22 im Schmelzteil 16a vor der Läuterbank 11, d.h., in einem Bereich, in dem das Wannenbassin 3 eine erheblich größere Tiefe hat, beispielsweise die mehr als zweifache Tiefe des Läuterteils 12, so daß sich an dieser Stelle eine ungehinderte Aufwärtsströmung der Glasschmelze vom Wannenboden in Richtung auf die Glasbadoberfläche ausbilden kann.

Zwischen der ersten Stirnwand 17 und der ersten Trennwand 18 wird ein weiterer Abgasraum 24 gebildet, der dem Aufgabeende 6 zugeordnet ist. In den Seitenwänden dieses Abgasraumes 24 befinden sich in spiegelsymmetrischer Anordnung Abzugsöffnungen 25 für die Abgase, die einem Wärmetauscher 26 für die Vorwärmung der Verbrennungsluft zugeführt werden. Eine relativ geringe Vorwärmung ist einer der bekannten Gründe dafür, daß in einem derartigen Ofen ein außerordentlich geringer Anteil von Stickoxiden gebildet wird. Die Leitungen für die Zufuhr von Brennstoffen und vorgewärmter Verbrennungsluft zu den Brennern 22 sind der Einfachheit halber nicht dargestellt.

Zwischen der ersten Trennwand 18 und der zweiten Trennwand 19 wird ein weiterer Abgasraum 27 über dem Vorwärmteil 16 gebildet, in dem sich nahe der zweiten Trennwand ein weiteres Paar fossiler Brenner 22a befinden kann, was aber nicht zwingend erforderlich ist. Auch von einem dieser Brenner ist in Figur 1 nur der Düsenstein 23a zu sehen.

Weiterhin von besonderer Bedeutung sind im vorliegenden Fall die Horizontalkomponenten der Strömungswege bzw. die Abstände L1 und L2. So ist zunächst zwischen der Innenfläche 17a der ersten Stirnwand 17 und der Mittenebene E der letzten Trennwand 19 vor dem Läuterteil 12 ein erster Abstand L1 vorhanden. In dem besagten Feuerraum 21 ist zwischen der Mittenebene E der letzten Trennwand 19 und der Innenfläche 20a der zweiten Stirnwand 20 ein zweiter Abstand L2 vorhanden. Hierbei ist nun das Verhältnis des zweiten Abstandes L2 in dem Feuerraum 21 zur Summe des ersten und des zweiten Abstandes (L1 + L2) zwischen den Innenflächen 17a bzw. 20a der ersten und der zweiten Stirnwand 17 bzw. 20 von besonderer Bedeutung. Dieses Verhältnis soll mindestens 0,5, vorzugsweise mindestens 0,53, betragen, d.h., die vorstehend angegebene Definition der Länge des Feuerraumes 21 beträgt mindestens die Hälfte der freien inneren Gesamtlänge des Oberbaus 4, welche Länge sich durch die Summe von L1 und L2 ausdrücken läßt.

Es ergibt sich aus den Figuren 1 und 2, daß die Abgase der Brenner 22 durch einen Strömungsweg, der durch die Abgasöffnungen 18a und 19a in den Trennwänden 18 und 19 definiert wird, in den Abgasraum 24 über dem Vorwärmteil 16 zurückgeführt werden. In diesem Abgasraum 24 befinden sich bekanntlich die beiden Abzugsöffnungen 25, von denen in den beiden Figuren jeweils nur eine sichtbar ist.

Da sich in dem Bereich der Glasbadoberfläche zwischen dem Aufgabeende 6 und der zweiten Trennwand 19 eine in Transportrichtung abnehmende Menge von Glasrohstoff befindet, ergibt sich durch die Führung der Abgase in dem beschriebenen Gegenstrom eine intensive Aufheizung des Glasrohstoffs von oben, wobei die Energie zur Aufheizung der Rohstoffe zu einem großen Teil aus dem Abgas stammt. Durch die heruntergezogenen Trennwände 18 und 19 wird die Einstrahlung der Brenner in die kältere Vorwärmzone 16 weitgehend unterbunden.

Durch die relativ kurze Horizontalkomponente des Strömungsweges bzw. des Abstandes L1 einerseits und durch die äußerst intensive Beheizung der Glasschmelze in demjenigen Teil des Feuerraumes 21, in dem der Wannenboden 9 einen großen Abstand von der Badoberfläche hat, wird eine äußerst intensive Strömung in der Glasschmelze erzeugt, die bis zum Aufgabeende 6 zurückreicht. Erst im Bereich des Aufgabeendes 6 bzw. in dem Abgasraum 24 sinkt das allmählich kälter werdende Glas zum Wannenboden 9 ab und kehrt von dort in den Einflußbereich der Brenner 22 zurück, wo die Glasschmelze wieder aufsteigt.

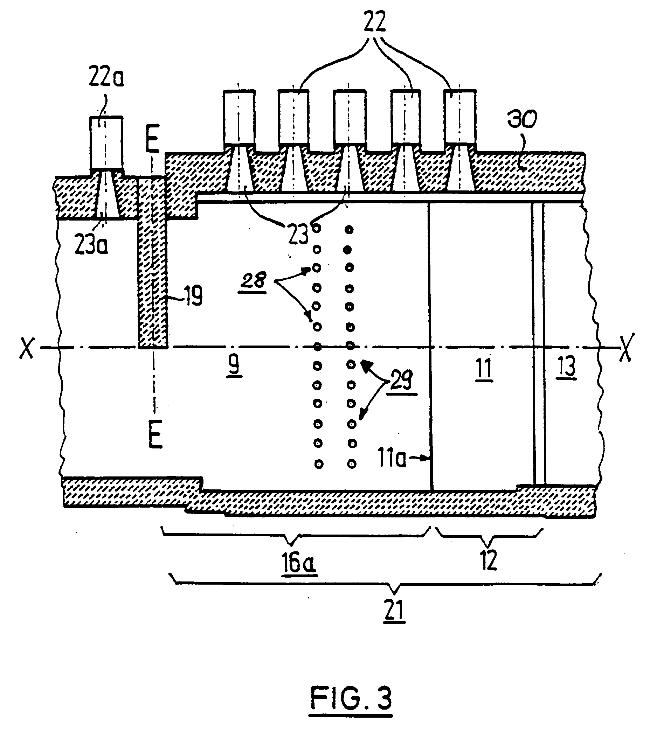

Unterstützt wird die Strömungswalze durch in Figur 3 gezeigte Bubbler 28, welche das kalte Bodenglas an die Oberfläche tragen. Die Bubbler 28 und 29 sind in einer oder zwei Reihen senkrecht zur Ofenachse X-X bzw. parallel zur Vorderkante 11a der Läuterbank 11 im Wannenboden 9 angeordnet, und zwar in einem Bereich, der zwischen 100 und 300 cm vor der Vorderkante 11a liegt. Die dadurch entstehende große Temperaturdifferenz zwischen Glasbad und Flamme führt zu einem erhöhten Wärmeübergang in das Glasbad.

Natürlich ist dieser Kreislaufströmung insgesamt eine Horizontalkomponente überlagert, die den Summenstrom des Glases vom Aufgabeende 6 durch den Schmelzteil 16a, den Läuterteil 12, den Homogenisierungsteil 13 und den Durchlaß 10 in die Arbeitswanne 15 fördert. Durch diese Strömungsführung wird jedoch insgesamt erreicht, daß im Bereich des Aufgabeendes 6 keine zusätzliche Heizenergie zugeführt werden muß so daß auf entsprechende Heizelektroden, zumindest aber auf deren Einsatz im Dauerbetrieb verzichtet werden kann.

In einem Wannenofen 1 zum Schmelzen von Glas sind zwischen dem Aufgabeende 6 für den Glasrohstoff und dem Durchlaß 10 für das geschmolzene Glas hintereinander ein Vorwärmteil 16, ein Schmelzteil 16a, ein Läuterteil 12 mit einer Läuterbank 11 und ein Homogenisierungsteil 13 angeordnet. Der zwischen zwei Stirnwänden 17, 20 gebildete Ofeninnenraum ist dabei durch Trennwände 18, 19 bis auf enge Abgasöffnungen 18a, 19a unterteilt. Der Schmelzteil 16a, der Läuterteil 12, mehrere Brenner 22 und der Homogenisierungsteil 13 sind einem gemeinsamen Feuerraum 21 des Oberbaus 4 zugeordnet. Zwischen der Innenfläche 17a der ersten Stirnwand 17 und der Mittenebene E der letzten Trennwand 19 vor dem Läuterteil 12 wird für das Glas ein erster Strömungsweg "L1" gebildet, und in dem Feuerraum 21 wird zwischen der Mittenebene E und der Innenfläche 20a der zweiten Stirnwand 20 ein zweiter Strömungsweg "L2" gebildet. Dabei wird das Verhältnis der Länge "L2" zur Summenlänge ("L1" + "L2") zu mindestens 0,5, vorzugsweise zu mindestens 0,53, gewählt. Die Längen "L1" und "L2" sind dabei die Horizontalkomponenten der betreffenden Strömungswege. Die Heizenergie wird der Glasschmelze zumindest überwiegend vor der Läuterbank 11 des Läuterteils 12 im Schmelzteil 16a zugeführt, und dem Glasrohstoff wird die Heiz und Schmelzenergie von oben her durch das Abgas und von unten her ausschließlich durch die bis zum Aufgabeende 6 zurückgeführte Strömung der Glasschmelze zugeführt. Dadurch benötigt das Aufgabeende 6 der Schmelzwanne 2 zumindest im Dauerbetrieb keine elektrische Beheizung.

## Patentansprüche

1. Verfahren zum Schmelzen von Glas in einem eine Schmelzwanne (2) mit einem Wannenbassin (3) mit einem Wannenboden (9) und einen Oberbau (4) mit einem Gewölbe (5) aufweisenden Wannenofen (1), der
a) in Längsrichtung zwischen dem nahe einer ersten Stirnwand (17) angeordneten Aufgabeende (6) für den Glasrohstoff und einer zweiten Stirnwand (20) hintereinander einen Vorwärmteil (16), einen Schmelzteil (16a), einen Läuterteil (12) mit einer vom übrigen Wannenboden aufragenden Läuterbank (11) und einen Homogenisierungsteil (13) aufweist, wobei
b) im Ofeninnenraum zwischen der ersten Stirnwand (17) am Aufgabeende (6) und dem Schmelzteil (16a) mindestens eine von dem Gewölbe (5) nach unten ragende, die Flammenstrahlung zurückhaltende Trennwand (18, 19) angeordnet ist, die zum Zwecke der Aufheizung des Glasrohstoffs durch das Abgas einen Strömungsweg für das von Brennern (22) kommende Abgas zum Vorwärmteil (16) freiläßt, und
c) der Schmelzteil (16a), der Läuterteil (12), mehrere Brenner (22) und der Homogenisierungsteil (13) einem gemeinsamen Feuerraum (21) zugeordnet sind, der an seinen beiden Enden von der letzten Trennwand (19) und der Innenfläche (20a) der zweiten Stirnwand (20) begrenzt wird und
d) zwischen der Innenfläche (17a) der ersten Stirnwand (17) und der Mittenebene (E) der besagten letzten Trennwand (19) vor dem Läuterteil (12) ein erster Strömungsweg mit einer Horizontalkomponente der Länge "L1" für das Glas gebildet wird, und
e) in dem besagten Feuerraum (21) zwischen der Mittenebene (E) der besagten letzten Trennwand (19) und der Innenfläche (20a) der zweiten Stirnwand (20) ein zweiter Strömungsweg mit einer Horizontalkomponente der Länge "L2" für das Glas gebildet wird, und wobei
f) durch Erzeugung eines Temperaturgradienten in der Glasschmelze durch Zufuhr von Heizenergie zur Glasbadoberfläche durch die in dem Feuerraum (21) angeordneten Brenner (22) eine Strömung vom Schmelzteil (16a) in Richtung auf das Aufgabeende (6) und eine entgegengesetzte Bodenströmung erzeugt werden,
**dadurch gekennzeichnet,** daß
g) das Verhältnis der Länge "L2" der Horizontalkomponente des zweiten Strömungsweges der Glasschmelze in dem Feuerraum (21) zur Summenlänge ("L1" + "L2") der Horizontalkomponenten des ersten und des zweiten Strömungsweges der Glasschmelze zu mindestens 0,5 gewählt wird,
h) die Heizenergie der Glasschmelze überwiegend im Schmelzteil (16a) zugeführt wird,
i) dem Glasrohstoff die Heiz- und Schmelzenergie von oben her durch das Abgas und von unten her ausschließlich durch die bis zum Aufgabeende (6) geführte Strömung der Glasschmelze zugeführt wird.

2. Verfahren nach Anspruch 1, **dadurch gekennzeichnet**, daß das Verhältnis L2 : (L1 + L2) zu mindestens 0,53 gewählt wird.

3. Verfahren nach Anspruch 1, **dadurch gekennzeichnet**, daß zusätzlich in einer Entfernung von 100 bis 300 cm in Strömungsrichtung vor der Läuterbank (11) durch Gasblasen aus mindestens einer Bubbler-Reihe (28, 29), die senkrecht zur Längsachse der Schmelzwanne (2) angeordnet ist, die Strömung in der Schmelze unterstützt wird.

4. Verfahren nach Anspruch 3, **dadurch gekennzeichnet**, daß durch mindestens zwei sich gegenüberliegende Brenner (22), die über der mindestens einen Bubbler-Reihe (28, 29) angeordnet sind und die eine höhere Leistung als die übrigen Brenner aufweisen, der Energieeintrag in die Schmelze im Bereich der Bubbler (28, 29) erhöht wird.

5. Wannenofen zum Schmelzen von Glas mit einer Schmelzwanne (2) mit einem Wannenbassin (3) mit Wannenboden (9) und mit einem Oberbau (4) mit einem Gewölbe (5), der
a) in Längsrichtung zwischen dem nahe einer ersten Stirnwand (17) angeordneten Aufgabeende (6) für den Glasrohstoff und einer zweiten Stirnwand (20) hintereinander einen Vorwärmteil (16), einen Schmelzteil (16a), einen Läuterteil (12) mit einer vom übrigen Wannenboden aufragenden Läuterbank (11) und einen Homogenisierungsteil (13) aufweist, wobei
b) im Ofeninnenraum zwischen der ersten Stirnwand (17) am Aufgabeende (6) und dem Schmelzteil (16a) mindestens eine von dem Gewölbe (5) nach unten ragende, die Flammenstrahlung zurückhaltende Trennwand (18, 19) angeordnet ist, die zum Zwecke der Aufheizung des Glasrohstoffs durch das Abgas einen Strömungsweg für das von den Brennern (22) kommende Abgas zum Vorwärmteil (16) freiläßt, und
c) der Schmelzteil (16a), der Läuterteil (12), mehrere Brenner (22) und der Homogenisierungsteil (13) einem gemeinsamen Feuerraum (21) des Oberbaus (4) zugeordnet sind, der an seinen beiden Enden von der letzten Trennwand (19) und der Innenfläche (20a) der zweiten Stirnwand (20) begrenzt wird, und
d) zwischen der Innenfläche (17a) der ersten Stirnwand (17) und der Mittenebene (E) der besagten letzten Trennwand (19) vor dem Schmelzteil (16a) und dem Läuterteil (12) ein erster Abstand "L1" vorhanden ist, und
e) in dem besagten Feuerraum (21) zwischen der Mittenebene (E) der besagten letzten Trennwand (19) und der Innenfläche (20a) der zweiten Stirnwand (20) ein zweiter Abstand "L2" vorhanden ist,
**dadurch gekennzeichnet,** daß
f) das Verhältnis des zweiten Abstandes "L2" in dem Feuerraum (21) zur Summe des ersten und des zweiten Abstandes ("L1" + "L2") zwischen den Innenflächen (17a, 20a) der ersten und der zweiten Stirnwand (17, 20) mindestens 0,5 beträgt,
g) die Mehrzahl der Brenner (22, 22a) im Bereich des Schmelzteils (16a) vor der Läuterbank (11) des Läuterteils (12) über dem tiefer liegenden Teil des Wannenbodens (9) angeordnet ist, und
h) das Aufgabeende (6) der Schmelzwanne (2) frei von elektrischen Heizeinrichtungen ist.

6. Wannenofen nach Anspruch 5, **dadurch gekennzeichnet**, daß das Verhältnis L2 : (L1 + L2) mindestens 0,53 beträgt.

7. Wannenofen nach Anspruch 5, **dadurch gekennzeichnet**, daß den beiden Seitenwänden (21a) des Feuerraums (21) mindestens mehrere Paare gegenüberliegender Brenner (22) zugeordnet sind, von denen mindestens drei Brennerpaare vor der Vorderkante (11a) der Läuterbank (11) angeordnet sind.

8. Wannenofen nach Anspruch 7, **dadurch gekennzeichnet**, daß den beiden Seitenwänden (21a) des Feuerraumes (21) mehrere Paare gegenüberliegender Brenner (22) zugeordnet sind, von denen vier Brennerpaare vor der Vorderkante (11a) der Läuterbank (11) angeordnet sind.

9. Wannenofen nach Anspruch 5, **dadurch gekennzeichnet**, daß innerhalb des ersten Abstandes "L1" zwischen der ersten Stirnwand (17) und der letzten Trennwand (19) eine weitere Trennwand (18) mit einer Abgasöffnung (18a) für das Abgas der Brenner (22) angeordnet ist und somit im Vorwärmteil (16) zwei Abgasräume (24, 27) vorhanden sind, und daß in dem in Glas-Strömungsrichtung gesehenen zweiten Abgasraum (27) in dessen beiden Seitenwände mindestens ein weiteres Brennerpaar (22a) angeordnet ist.

10. Wannenofen nach Anspruch 5, **dadurch gekennzeichnet**, daß im Wannenbassin (3) in einer Entfernung von 100 bis 300 cm in Strömungsrichtung vor der Läuterbank (11) mindestens eine Bubbler-Reihe (28, 29) angeordnet ist.

11. Wannenofen nach Anspruch 10, **dadurch gekennzeichnet**, daß der mindestens einen Bubbler-Reihe (28, 29) mindestens zwei sich gegenüberliegende Brenner (22) angeordnet sind, die für eine höhere Leistung als die übrigen Brenner ausgelegt sind.

## Claims

1. Process for melting glass in a tank furnace (1) comprising a melt tank (2) having a tank basin (3) with a tank bottom (9) and a superstructure (4) with an arch (5), which
a: comprises in the longitudinal direction between the delivery end (6) for the glass raw material configured near a first end wall (17) and a second end wall (20) one behind the other a pre-heating part (16), a melt part (16a), a refining part (12) with a refining bank (11) which extends upwards from the tank bottom, and a homogenising part (13); and
b: inside the furnace chamber between the first end wall (17) at the delivery end (6) and the melt part (16a) is arranged at least one separating wall (18, 19), which extends downwards from the arch (5) and holds back the flame radiation and, for the purpose of heating the glass raw material by the waste gas, offers a flow path for waste gas coming from the burners (22) to the pre-heating part (16); and
c: the melt part (16a), the refining part (12), a plurality of burners (22) and the homogenising part (13) are associated with a common furnace chamber (21) which is at its both ends defined by the last separating wall (19) and the inside surface (20a) of the second end wall (20); and
d: between the inside surface (17a) of the first end wall (17) and the middle plane (E) of said last separating wall (19) in front of the refining part (12) is established a first flow path with a horizontal component of length "L1" for the glass; and
e: in said, furnace chamber (21) between the middle plane (E) of said last separating wall (19) and the inside surface (20a) of the second end wall (20) is established a second flow path with a horizontal component of length "L2" for the glass; and
f: a flow from the melt part (16a) in the direction of the delivery end (6) and an opposing ground flow are established by generating a temperature gradient in the glass melt by delivery of heating energy to the glass bath surface by means of burners (22) configured in the furnace chamber (21);
**characterised in that**
g: the ratio of length "L"" of the horizontal component of the second flow path of the glass melt in the furnace chamber (21) and the sum length ("L1" + "L2") of the horizontal components of the first and the second flow path of the glass melt are selected at least at 0.5;
h: the heating energy of the glass melt is predominently delivered in the melt part (16a);
i: the glass raw material is fed heating and melt energy from the top through the waste gas and from the bottom exclusively by the glass melt flow which is ducted up to the delivery end (6).

2. Process according to Claim 1, **characterised in that** the ratio L2 : (L1 + L2) is selected at least at 0.53.

3. Process according to Claim 1, **characterised in that** the flow in the melt is additionally supported at a distance between 100 and 300 cm ahead of the refining bank (11) as seen in the flow direction by gas blowing from at least one bubbler series (28, 29) which is configured vertically to the longitudinal axis of the melt tank (2).

4. Process according to Claim 3, **characterised in that** the energy input into the melt in the area of the bubblers (28, 29) is increased by at least two oppositely positioned burners (22) which are configured above the at least one bubbler series (28, 29) and which have a higher output than the other burners.

5. Tank furnace for melting glass with a melt tank (2) with a tank basin (3) with tank bottom (9) and a superstructure (4) with an arch (5), which
a: comprises in the longitudinal direction between a delivery end (6) for glass raw material arranged near a first end wall (17) and a second end wall (20) one behind the other a pre-heating part (16), a melt part (16a), a refining part (12) with a refining bank (11) which extends upward from the tank bottom and a homogenising part (13); and
b: in the furnace inside chamber between the first end wall (17) at the delivery end (6) and the melt part (16a) is configured at least one separating wall (18, 19), which extends downward from the arch (5) and holds back the flame radiation which, for the purpose of heating the glass raw material by the waste gas, offers a flow path for waste gas coming from the burners (22) to the pre-heating part (16); and
c: the melt part (16a), the refining part (12), a plurality of burners (22) and the homogenising part (13) are associated with a common furnace chamber (21) of the superstructure (4) which is at its both ends defined by the last separating wall (19) and the inside surface (20a) of the second end wall (20); and
d: a first gap "L1" exists in front of the melt part (16a) and the refining part (12) between the inside surface (17a) of the first end wall (17) and the middle plane (E) of said last separating wall (19); and
e: a second gap "L2" exists in said furnace chamber (21) between the middle plane (E) of said last separating wall (19) and the inside surface (20a) of the second end wall (20),
**characterised in that**
f: the ratio of second gap "L2" in the furnace chamber (21) relative to the sum of the first and second gap ("L1" + "L2") between the inside surfaces (17a, 20a) of the first and the second end wall (17, 20) is at least 0.5;
g: the plurality of the burners (22, 22a) is configured in the area of the melt part (16A) in front of the refining bank (11) of the refining part (12) above the lower part of the tank bottom (9); and
h: the delivery end (6) of the melt tank (2) is free from electric heating devices.

6. Tank furnace according to Claim 5, **characterised in that** the ratio L2 : (L1 + L2) is at least 0.53.

7. Tank furnace according to Claim 5, **characterised in that** the two side walls (21a) of the furnace chamber (21) are associated at least with several pairs of oppositely positioned burners (22) of which at least three pairs of burners are configured in front of the front edge (11a) of the refining bank (11).

8. Tank furnace according to Claim 7, **characterised in that** the two side walls (21a) of the furnace chamber (21) are associated with a plurality of pairs of oppositely positioned burners (22) of which four pairs of burners are configured in front of the front edge (11a) of the refining bank (11).

9. Tank furnace according to Claim 5, **characterised in that** within first gap "L1" between the first end wall (17) and the last separating wall (19) is configured a further separating wall (18) with a waste-gas opening (18a) for the waste gas of the burners (22), and thus two waste-gas chambers (24, 27) are provided in the pre-heating part (16), and in the second waste-gas chamber (27), as seen in the glass-flow direction, at least one further pair of burners (22a) is configured in its two sidewalls.

10. Tank furnace according to Claim 5, **characterised in that** in the tank basin (3) at a distance between 100 and 300 cm in front of the refining bank (11), as seen in the flow direction, is arranged at least one bubbler row (28, 29).

11. Tank furnace according to Claim 10, **characterised in that** in the at least one bubbler row (28, 29) are arranged at least two oppositely positioned burners (22) which are designed for higher output than the other burners.

## Revendications

1. Procédé de fusion du verre dans un four à cuve (1) comportant une cuve de mise en fusion (2) comprenant une cuve (3) avec un fond de cuve (9) une superstructure (4) avec une voûte (5), qui,
a) selon la direction longitudinale, entre l'extrémité (6) d'alimentation en matières premières pour le verre, disposée près d'une première paroi frontale (17), et une seconde paroi frontale (20), présente, l'une derrière l'autre, une partie de préchauffage (16), une partie de mise en fusion (16), une partie d'affinage (12) avec un banc d'affinage (11) qui dépasse du reste du fond de cuve et une partie d'homogénéisation (13), dans lequel
b) dans l'espace intérieur du four, entre la première paroi frontale (17), à l'extrémité d'alimentation (6), et la partie de mise en fusion (16a), est disposée au moins une cloison (18, 19) qui descend vers le bas depuis la voûte (5), qui retient le rayonnement de la flamme et qui, aux fins de réchauffement des matières premières pour le verre par les fumées, libère un chemin d'écoulement vers la partie de préchauffage (16) pour les fumées provenant des brûleurs (22), et
c) la partie de mise en fusion (16a), la partie d'affinage (12), plusieurs brûleurs (22) et la partie d'homogénéisation (13) correspondent à un espace de chauffe commun (21) qui est limité, à ses deux extrémités, par la dernière cloison (19) et par la surface intérieure (20a) de la seconde paroi frontale (20), et
d) entre la surface intérieure (17a) de la première paroi frontale (17) et le plan médian (E) de la dernière cloison mentionnée (19) est formé pour le verre, en avant de la partie d'affinage (12), un premier chemin d'écoulement d'une composante horizontale de longueur "L1" et
e) dans ledit espace de chauffe (21), entre le plan médian (E) de la dernière cloison mentionnée (19) et la surface intérieure (20a) de la paroi frontale (20) est formé pour le verre un second chemin d'écoulement d'une composante horizontale de longueur "L2", et dans lequel
f) en produisant un gradient de température dans le bain de fusion du verre par apport d'énergie thermique vers la surface du bain de fusion du verre au moyen des brûleurs (22) disposés dans l'espace de chauffe (21), on produit un écoulement, depuis la partie de mise en fusion (16a), en direction de l'extrémité d'alimentation (6) et un écoulement de fond, opposé,
caractérisé par le fait que
g) on choisit pour le rapport entre la longueur "L2" de la composante horizontale du second chemin d'écoulement du bain de fusion du verre dans l'espace de chauffe (21) et la longueur totale ("L1" + "L2") des composantes horizontales du premier et du second chemins d'écoulement du bain de fusion du verre la valeur d'au moins 0,5.
h) on amène l'énergie de chauffage au bain de fusion du verre principalement dans la partie de mise en fusion (16a),
i) on amène aux matières premières du verre l'énergie de chauffage et de mise en fusion d'en haut au moyen des fumées et d'en bas exclusivement au moyen de l'écoulement du bain de fusion du verre qui se fait jusqu'à l'extrémité d'alimentation (6).

2. Procédé selon la revendication 1, caractérisé par le fait que l'on choisit pour le rapport L2 : (L1 + L2) la valeur d'au moins 0,53.

3. Procédé selon la revendication 1, caractérisé par le fait qu'en outre, à une distance de 100 à 300 cm dans le sens de l'écoulement, en avant du banc d'affinage (11), l'écoulement dans le bain de fusion est aidé par des bulles de gaz sortant d'au moins une rangée de bulleurs (28, 29) qui est disposée perpendiculairement à l'axe longitudinal de la cuve de mise en fusion (2).

4. Procédé selon la revendication 3, caractérisé par le fait que l'apport d'énergie dans le bain de mise en fusion au voisinage des bulleurs (28, 29) est accru par au moins deux brûleurs (22) qui sont situés en face l'un de l'autre, sont disposés au-dessus de la rangée de bulleurs (28, 29), dont il y a au moins une, et présentent une puissance supérieure à celle des autres brûleurs.

5. Four à cuve pour la fusion de verre dans un four à cuve (1) comportant une cuve de mise en fusion (2) comprenant une cuve (3) avec un fond de cuve (9) une superstructure (4) avec une voûte (5), qui,
a) selon la direction longitudinale, entre l'extrémité (6) d'alimentation en matières premières pour le verre, disposée près d'une première paroi frontale (17), et une seconde paroi frontale (20), présente, l'une derrière l'autre, une partie de préchauffage (16), une partie de mise en fusion (16), une partie d'affinage (12) avec un banc d'affinage (11) qui dépasse du reste du fond de cuve et une partie d'homogénéisation (13), dans lequel
b) dans l'espace intérieur du four, entre la première paroi frontale (17), à l'extrémité d'alimentation (6), et la partie de mise en fusion (16a), est disposée au moins une cloison (18, 19) qui descend vers le bas depuis la voûte (5), qui retient le rayonnement de la flamme et qui, aux fins de réchauffement des matières premières pour le verre par les fumées, libère un chemin d'écoulement vers la partie de préchauffage (16) pour les fumées provenant des brûleurs (22), et
c) la partie de mise en fusion (16a), la partie d'affinage (12), plusieurs brûleurs (22) et la partie d'homogénéisation (13) correspondent à un espace de chauffe commun (21) de la superstructure (4) qui est limité, à ses deux extrémités, par la dernière cloison (19) et par la surface intérieure (20a) de la seconde paroi frontale (20), et
d) entre la surface intérieure (17a) de la première paroi frontale (17) et le plan médian (E) de la dernière cloison mentionnée (19), en avant de la partie de mise en fusion (17) et de la partie d'affinage (12), il y a une première distance "L1" et
e) dans ledit espace de chauffe (21) entre le plan médian (E) de la dernière cloison mentionnée (19) et la surface intérieure (20a) de la seconde paroi frontale (20) il y a une seconde distance "L2",
caractérisé par le fait que
f) le rapport entre la seconde distance "L2" dans l'espace de chauffe (21) et la somme de la première et de la seconde distance ("L1" + "L2") entre les surfaces intérieures (17a, 20a) de la première et de la seconde parois frontales (17, 20) vaut au moins 0,5.
g) la pluralité des brûleurs (22, 22a) est disposée dans la zone de la partie de mise en fusion (16a), en avant du banc d'affinage (11) de la partie d'affinage (12), au-dessus de la partie du fond de cuve (9) située plus profondément, et
h) l'extrémité d'alimentation (6) de la cuve de mise en fusion (2) est exempte de dispositifs électriques de chauffage.

6. Four à cuve selon la revendication 5, caractérisé par le fait que le rapport L2: (L1 + L2) vaut au moins O,53.

7. Four à cuve selon la revendication 5, caractérisé par le fait qu'aux deux parois latérales (21a) de l'espace de chauffe (21) sont associées au moins plusieurs paires de brûleurs (22) qui sont situés en face l'un de l'autre et dont au moins trois paires de brûleurs sont disposées en avant de l'arête avant (11a) du banc d'affinage (11).

8. Four à cuve selon la revendication 7, caractérisé par le fait qu'aux deux parois latérales (21a) de l'espace de chauffe (21) sont associées plusieurs paires de brûleurs (22) qui sont situés en face l'un de l'autre et dont quatre paires de brûleurs sont disposées en avant de l'arête avant (11a) du banc d'affinage (11).

9. Four à cuve selon la revendication 5, caractérisé par le fait qu'à l'intérieur de la première distance "L1" entre la première paroi frontale (17) et la dernière cloison (19) est disposée une autre cloison (18) avec une ouverture (18a) pour les fumées des brûleurs (22) et qu'ainsi il y a dans la partie de préchauffage (16) deux espaces des fumées (24, 27), et que dans le second espace des fumées (27), prévu dans le sens de l'écoulement du verre, est disposée, dans ses deux parois latérales, au moins une autre paire de brûleurs (22a).

10. Four à cuve selon la revendication 5, caractérisé par le fait que dans la cuve (3), à une distance de 100 à 300 cm en avant du banc d'affinage (11), dans le sens de l'écoulement, est disposée au moins une rangée de bulleurs (28, 29)

11. Four à cuve selon la revendication 10, caractérisé par le fait qu'à la rangée de bulleurs (28, 29) dont il y a au moins une, correspondent au moins deux brûleurs (22) qui sont situés en face l'un de l'autre et sont conçus pour une puissance plus élevée que celle des autres brûleurs.
